(19) Europäisches Patentamt
European Patent Office
Office européen des brevets

(11) Numéro de publication: **0 175 623**
**A1**

(12) # DEMANDE DE BREVET EUROPEEN

(21) Numéro de dépôt: **85401858.7**

(51) Int. Cl.[4]: **G 06 F 15/336**

(22) Date de dépôt: **24.09.85**

(30) Priorité: **24.09.84 FR 8414624**

(43) Date de publication de la demande: **26.03.86 Bulletin 86/13**

(84) Etats contractants désignés: **DE GB NL**

(71) Demandeur: **Duhamel, Pierre, 97, avenue de Verdun, F-92130 Issy les Moulineaux (FR)**
Demandeur: **Holmann, Hendrik, 21, rue d'Estienne d'Orves, F-92130 Issy les Moulineaux (FR)**

(72) Inventeur: **Duhamel, Pierre, 97, avenue de Verdun, F-92130 Issy les Moulineaux (FR)**
Inventeur: **Holmann, Hendrik, 21, rue d'Estienne d'Orves, F-92130 Issy les Moulineaux (FR)**

(74) Mandataire: **Fort, Jacques, CABINET PLASSERAUD 84, rue d'Amsterdam, F-75009 Paris (FR)**

(54) **Dispositif de traitement en temps réel de signal numérique par convolution.**

(57) Le dispositif, utilisable dans les installations exigeant un traitement numérique du signal, comprend un circuit multiplieur associé à des circuits à transformation en nombre entier, à module M de la forme $2^p - 2^q + 1$ sur chaque entrée et à un circuit de transformation inverse sur la sortie. Chacun des circuits à transformation en nombres entiers (16) est précédé d'un circuit de changement de base arithmétique et de codage (12) et le circuit de transformation inverse est suivi d'un circuit de décodage et de retour à la base de départ (14). Ces circuits sont prévus de façon qu'un nombre X modulo M dans la base d'origine en puissances de 2 corresponde, dans la nouvelle base, à un nombre

$$X = \sum_{i=0}^{p-q-1} f_i x_i + \sum_{j=0}^{q-1} e_j \cdot x_{j-q+p} \text{ (modulo M)}.$$

$f_0$ étant un entier compris entre 1 et M-1.

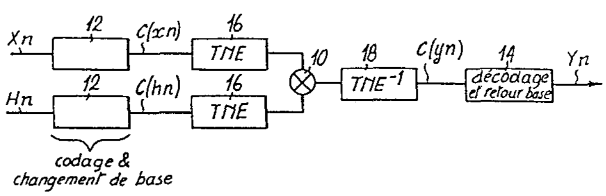


EP 0 175 623 A1

Dispositif de traitement en temps réel de signal numérique par convolution

L'invention concerne les dispositifs pour effectuer, sur un signal, un traitement en temps réel, nécessitant donc une vitesse élevée de calcul, comportant le calcul de produits de convolution que l'on peut ramener à des convolutions circulaires de la forme :

$$Y_n = \sum_{k=0}^{N-1} x_k \cdot h_{n-k}$$

où n = 0, 1,..., N-1, sont pris modulo N ainsi que n-k.

L'invention est utilisable dans toutes les installations exigeant un traitement numérique du signal et elle trouve une application particulièrement importante dans les filtres numériques, incorporés notamment aux modems constituant interfaces entre un système numérique et un canal de transmission.

L'obtention d'une vitesse de traitement élevée passe par la réduction de la complexité des calculs à effectuer par point de la convolution à calculer. Une solution classique utilisée est l'application de la transformée de Fourier discrète sur x(n) et h(n) et de la transformée inverse après multiplication des résultats. Mais cette solution fait intervenir des nombres complexes et conduit à des erreurs d'arrondi. Au surplus, le nombre de multiplications et d'additions nécessaire par point de la convolution, même lorsqu'on utilise des algorithmes évolués (transformée de Fourier rapide, algorithme de Winograd), reste excessif pour permettre un traitement en temps réel de débits élevés de données.

Une solution qui parait plus avantageuse consiste à utiliser la transformée en nombres entiers (TNE) qui conduit à un dispositif de calcul de produits de convolution du genre montré en Figure 1. L'entrée et

la sortie des circuits de TNE sont reliées par la relation :

$$X_k = \sum_{n=0}^{N-1} x(n).\ \alpha^{nk} \pmod{M} \qquad (1)$$

avec k = 0,1,..., N-1.

Dans cette formule, $\alpha$ est une racine primitive Nième de l'unité modulo M.

Le circuit $TNE^{-1}$ effectue la transformation inverse.

Les avantages que l'on peut attendre des TNE sont de deux ordres. La convolution est obtenue exactement, sans bruit de calcul, pourvu que sa valeur soit inférieure à M. Si le couple longueur N - module M est correctement choisi, $\alpha$ peut être très simple, par exemple égal à 2. Dans ce cas, la transformée ne comporte plus de multiplications générales, mais uniquement des multiplications par $2^k$ qui sont réalisées par décalage dans des circuits binaires. Pour des transformées plus longues, on peut également adopter $\alpha = \sqrt{2}$. Là encore, on supprime les multiplications, dans la partie transformée, sans augmenter notablement le nombre d'additions. Mais on se heurte en contrepartie à deux inconvénients : les multiplications sont remplacées par des manipulations au niveau de l'élément binaire (bit) ; les opérations, notamment les additions, doivent être effectuées en modulo M. L'examen détaillé montre que l'on ne tire véritablement parti de ces simplifications qu'en les mettant en oeuvre dans des transformées de petite longueur, notamment pour N = 4 et N = 3. Mais, dans la pratique, il est nécessaire de disposer de transformées de longueur totale très supérieure, ce qui implique d'utiliser des transformées décomposables en transformées de faible longueur.

La prise en considération de ces motifs a

conduit jusqu'ici à adopter essentiellement des arithmétiques de TNE utilisant des valeurs de M résultant de sommes ou différences de deux ou trois puissances de 2 différentes.

Dans le premier cas, où $M = 2^n \pm 1$, on se trouve en présence de deux transformées connues (Mersenne et Fermat) pour lesquelles l'arithmétique est simple. Mais ces transformées ne permettent pas de grandes longueurs N de convolution.

Dans le second cas, les arithmétiques actuellement utilisées ne sont intéressantes que pour des valeurs de M permettant de travailler avec 2 comme racine primitive de l'unité modulo M, ce qui conduit à $M = 2^{2q} - 2^q+1$ ou $M = 2^{2q-1} - 2^q+1$.

La première solution est la plus avantageuse car elle autorise facilement une décomposition en transformées de faible longueur pouvant se calculer à l'aide d'algorithmes rapides.

Ces solutions, même conjuguées à un codage "diminué de 1" qui fait correspondre $C(x) = x-1$ à x, pour simplifier les décalages, restent insuffisantes. Le niveau de complexité du décalage reste encore de trois additions dans le cas où $M = 2^{2q} - 2^q+1$.

L'invention vise à fournir un dispositif de traitement en temps réel utilisant les TNE, avec un module M de la forme $2^P - 2^q+1$ (la forme particulière $2^{2q} - 2^q+1$ étant plus avantageuse pour certaines opérations), conduisant à des opérations notablement simplifiées, notamment les décalages.

Dans ce but, l'invention propose notamment un dispositif de traitement en temps réel de signal numérique par convolution, comprenant un circuit multiplicateur associé à des circuits à transformation en nombres entiers, à module M de la forme

$$2^P - 2^q+1$$

sur chaque entrée, et à un circuit à transformation

inverse sur la sortie, caractérisé en ce que chacun des circuits à transformation en nombres entiers est précédé d'un circuit de changement de base arithmétique et de codage, et en ce que le circuit de transformation inverse est suivi d'un circuit de décodage et de retour à la base de départ, lesdits circuits étant prévus de façon qu'à un nombre X modulo M dans la base d'origine en puissance de 2 corresponde, dans la nouvelle base, un nombre $x_{p-1} \ldots x_{p-2} \ldots x_1 x_0$ tel que

$$X = \sum_{i=0}^{P-q-1} f_i x_i + \sum_{j=0}^{q-1} e_{j-q+P} \text{ (modulo M)} \quad (2)$$

Dans la nouvelle base arithmétique, plusieurs séries de $f_i$ et $e_j$ conduisant aux mêmes circuits arithmétiques sont possibles. Mais elles doivent remplir les conditions :

$(f_o, M) = 1$ (c'est-à-dire que $f_o$ et M sont premiers entre eux, $f_o$ étant un entier compris entre 1 et M-1),

$$\begin{cases} 2f_{p-q-1} = e_o + f_o \text{ (mod M) et } 2e_{q-1} = -f_o \text{ (mod M)} \\ 2f_i = f_{i+1},\ 2e_i = e_{i+1} \text{ pour les autres indices.} \end{cases}$$

Deux cas pratiques du fait de leur simplicité consistent à prendre :

$f_o = +1$ ; on a alors $f_j = 2^j$ $\quad j=0,\ldots\ldots,P-q-1$
$e_j = 2^{p-q+j} - 2^j$ $\quad j=0,\ldots\ldots,q-1$

ou

$f_o = -1$ ; on a alors $f_j = -2^j$ $\quad j=0,\ldots\ldots,P-q-1$
$e_j = 2^{p-q+j} + 2^j$ $\quad j=0,\ldots\ldots,q-1$

Une étude théorique montre qu'il s'agit bien d'une base arithmétique pour l'ensemble des entiers modulo M : tout nombre $0 \leq X < M$ a une seule représentation

binaire dans la nouvelle base, à l'exception de $2^q-1$ nombres qui ont exactement deux représentations, ce qui n'a aucune importance pour les circuits, pourvu que l'on sache décoder ces deux représentations. Dans le cas, important en pratique, où P = 2q, $f_o = 1$, l'ensemble de ces nombres est constitué par les multiples de $2^q$.

Le codage (ainsi que le décodage) peut être effectué après changement de base aussi bien qu'avant changement de base. Mais, dans le second cas, ce codage fera correspondre $C(X) = X-f_o$ à X. On verra dans la suite que le choix $f_o = -1$ permet de regrouper codage et changement de base dans le même circuit.

L'invention sera mieux comprise à la lecture de la description qui suit de dispositifs qui en constituent des modes particuliers d'exécution, donnés à titre d'exemples non limitatifs. La description se réfère aux dessins qui l'accompagnent, dans lesquels :

- la Figure 1, déjà mentionnée, est un schéma de principe d'un dispositif de calcul de produits de convolution utilisant des circuits de TNE,

- la Figure 2, similaire à la Figure 1, montre un dispositif de traitement de signal faisant intervenir deux signaux d'entrée X et H, correspondant à des nombres modulo M, exprimés en base habituelle des puissances de 2, et un signal de sortie Y, convolution circulaire de X et H,

- la Figure 3 est un schéma montrant les notations utilisées pour désigner les entrées et sorties d'un additionneur-soustracteur élémentaire utilisé dans les différents circuits du dispositif,

- les Figures 4 et 5 sont des synoptiques d'additionneurs-soustracteurs d'application générale, celui de la Figure 5 associant plusieurs additionneurs-soustracteurs élémentaires en complément à 2 ;

- la Figure 5a, similaire à la Figure 5, montre une réalisation simplifiée,

- les Figures 6 et 7 sont des synoptiques de circuits de transformation en nombres entiers de longueur 3 et 4, respectivement,

- la Figure 8 est un synoptique d'un circuit de multiplication par $2^k$ dans le code, utilisable dans des circuits de recombinaison de transformées de longueur faible,

- les Figures 9 et 10 montrent des variantes de réalisation de la Figure 8,

- la Figure 11 est un synoptique d'un circuit de multiplication par $\sqrt{2}$ dans le code, utilisable dans des circuits de recombinaison de transformées courtes,

- les Figures 12 et 13 sont des synoptiques montrant deux circuits possibles de codage et de changement de base, faisant correspondre C(x) à X,

- la Figure 14, similaire aux Figures 12 et 13, est un schéma de principe d'un circuit de décodage et de retour à la base d'origine faisant correspondre Y à C(y),

- la Figure 15, similaire à la Figure 14, montre un circuit de décodage et de retour à la base de départ fournissant Y sous forme de complément à 2,

- les Figures 16 et 17 sont des synoptiques de variantes de réalisation de la Figure 15,

- la Figure 18 est un synoptique de principe d'un circuit de multiplication général utilisable dans le dispositif de la Figure 3,

les Figures 12 à 17 correspondent toutes au cas $f_\sigma = -1$, où les opérations de codage (respectivement de décodage) et de changement de base (respectivement de retour à la base de départ) sont effectuées dans le même circuit.

Avant de décrire des circuits permettant de mettre en oeuvre l'invention, on définira le synoptique du dispositif dans son ensemble, puis les fonctions à remplir par ses blocs constitutifs.

Comme le montre la Figure 2, sur chacune des voies aboutissant au jeu de multiplicateurs 10 la donnée d'entrée Xn ou Hn (représentée par un multiplet en numération binaire, modulo M) est appliquée à un circuit 12 de changement de base et de codage pour donner naissance à une valeur codée C(xn) ou C(hn). Les deux opérations peuvent être effectuées dans un ordre quelconque. Pour Xn par exemple, on peut :

- soit effectuer d'abord le changement de base, qui transforme la valeur X en x, puis le codage pour transformer x en $C(x) = x-f_0$,

- soit effectuer le codage $C(X) = X-f_0$ avant le changement de base qui donne C(x).

Le circuit 14 de décodage et de retour à la base de départ utilise la possibilité déjà citée de recombiner ces deux opérations dans le cas où $f_0 = -1$.

Les circuits 16 et 18 destinés à calculer les transformées TNE et $TNE^{-1}$ utiliseront toujours des circuits fournissant des transformées de faible longueur, généralement correspondant à N = 3 ou 4, associés à des circuits d'assemblage de telles transformées pour arriver à la longueur requise. On cherchera à réaliser les circuits fournissant les transformées de faible longueur à partir d'un petit nombre de types d'opérateurs afin de faciliter la conception et la fabrication des circuits.

On décrira maintenant, successivement :

- les composants élémentaires utilisés dans les circuits,

- des constitutions possibles de blocs additionneurs-soustracteurs incorporant les éléments de base,

- les circuits d'élaboration de transformées de longueur 3 et de longueur 4,

- les circuits nécessaires à l'assemblage de telles transformées pour obtenir des transformées de longueur supérieure,

- et enfin les circuits qu'on peut qualifier

d'extérieurs à la TNE, c'est-à-dire les circuits de changement de base, de codage, de décodage et de multiplication générale calculant le produit de convolution.

Les opérateurs seront décrits dans leur application à des transformées où P = 2q. Mais les résultats sont en général également vrais pour d'autres couples de valeurs de P et de q qui ne respectent pas cette condition.

<u>Composants élémentaires</u>

Les composants élémentaires utilisés dans la constitution des additionneurs-soustracteurs en arithmétique modulo M (Figures 4, 5 et 5<u>a</u>) sont en nombre aussi faible que possible. Ils interviennent chacun sur q bits (ou sont constitués par l'association d'éléments traitant chacun un nombre de bits qui est un sous-multiple de q).

Ces composants élémentaires comportent des inverseurs logiques, ainsi que des circuits ET, OU et OU EXCLUSIF de type classique. Ils comportent surtout des composants élémentaires additionneurs-soustracteurs 20. Dans le circuit de la Figure 4, il s'agit d'additionneurs-soustracteurs simples ; dans les circuits des Figures 5 et 5<u>a</u>, il s'agit d'additionneurs-soustracteurs en complément à 2. Les notations qui seront utilisées apparaissent sur la Figure 3 où :

x et y désignent les nombres appliqués à l'entrée,

z désigne le nombre apparaissant en sortie,

ri est la retenue entrante,

ro est la retenue sortante,

F est une entrée "fanion", destinée à fixer le mode de travail, par exemple :

pour F = 0, $z = x+y+ri+2^q.r0$

pour F = 1, $z = x+\overline{y}+ri+2^q.r0$

Les notations x et y utilisées ici pour décrire

le fonctionnement en additionneur et en soustracteur ne doivent évidemment pas être confondues avec celles qui interviennent dans le traitement global de convolution.

On utilisera par ailleurs les notations g0 et g1 pour désigner les commandes qui permettent de réaliser les divers types d'opérations requis, selon le Tableau I ci-après :

TABLEAU I

| g1 | g0 | Type d'opération | Calcul effectué avec C(x) et C(y) aux entrées | | |
|---|---|---|---|---|---|
| 0 | 0 | additions code | C(x+y) | $= x+y - f_o$ | Modulo M |
| 0 | 1 | additions modulo M | C(x)+C(y) | $= x+y - 2f_o$ | Modulo M |
| 1 | 0 | soustractions code | C(x-y) | $= x-y - f_o$ | Modulo M |
| 1 | 1 | soustraction modulo M | C(x)-C(y) | $= x-y$ | Modulo M |

On voit que chaque opération fait correspondre, à deux nombres x et y déjà codés sous la forme C(x) et C(y), le code de la somme C(x+y) ou une autre combinaison.

Les additions et soustractions code sont les seules indispensables : les autres opérations ne sont utiles que pour le décalage, où les additions modulo n'apportent qu'une simplification.

Le premier circuit qui va être décrit en faisant référence à la Fig. 4 permet d'effectuer ces quatre opérations à l'aide d'additionneurs-soustracteurs simples. Le second circuit, représenté en Fig. 5, effectue ces opérations à l'aide d'additionneurs-soustracteurs en complément à 2. Une version simplifiée n'effectuant que les additions soustractions code est donnée en Figure 5.

<u>Additionneur-soustracteur</u>

La Figure 4 montre une réalisation possible d'un additionneur-soustracteur "hors du code", comportant quatre additionneurs-soustracteurs élémentaires simples 20-11, 20-12, 20-13 et 20-14. L'additionneur-soustracteur est prévu pour traiter des nombres X et Y de chacun 2q bits pour fournir un nombre Z, également de 2q bits. Chaque additionneur-soustracteur élémentaire comporte deux entrées, identifiées par E1 et E2 et une entrée de retenue ri. Il comporte une sortie de résultat S et une

sortie de retenue r0.

Le circuit de la Figure 4 permet d'effectuer, sur les données X et Y, l'une quelconque des opérations:

addition code, addition modulo, soustraction code, soustraction modulo.

L'opération à effectuer est fixée par le niveau binaire g appliqué sur l'entrée de fanion F et le niveau logique ρ appliqué à l'entrée de retenue ri de l'additionneur-soustracteur élémentaire 20-12.

Les q bits de poids faible de X et de Y sont respectivement appliqués aux entrées E1 et E2 de l'additionneur-soustracteur élémentaire 20-12 ; les bits de poids fort de X et de Y sont respectivement appliqués aux entrées E1 et E2 de l'additionneur-soustracteur élémentaire 20-11. La sortie r0 de l'additionneur-soustracteur 20-12 est appliquée à la fois à l'entrée ri de l'additionneur-soustracteur 20-11 et à l'entrée ri de l'additionneur-soustracteur 20-14. La sortie de retenue r0 de l'additionneur-soustracteur 20-11 est appliquée aux entrées de fanion F des additionneurs-soustracteurs 20-13 et 20-14. La sortie S de l'additionneur-soustracteur 20-13 fournit alors les q bits de poids fort de Z ; la sortie S de l'additionneur-soustracteur 20-14 donne q-1 des bits de poids faible de Z. Enfin, le bit de poids le plus faible de Z est fourni par une porte NON OU EXCLUSIF 54 dont les entrées reçoivent les sorties r0 des additionneurs-soustracteurs 20-13 et 20-14. Il faut remarquer que ces deux additionneurs-soustracteurs effectuent des opérations qui se limitent à des propagations de retenue. Dans la mesure où on ne recherche pas essentiellement l'emploi de blocs élémentaires identiques, les éléments 20-13 et 20-14 peuvent être simplifiés de façon notable.

Dans ces conditions, on obtient la sortie Z donnée par le Tableau II ci-dessous :

TABLEAU II

| | g | p | Z |
|---|---|---|---|
| Add. code | 0 | 1 | $X + Y + f_o$ |
| Add. modulo | 0 | 0 | $X + Y$ |
| Soustr. code | 1 | 0 | $X - Y - f_o$ |
| Soustr.modulo | 1 | 1 | $X - Y$ |

Le circuit de la Fig. 5 permet , de son côté, de réaliser l'ensemble des fonctions définies dans le Tableau I sur des entrées constituées par des nombres de q bits, avec par exemple q = 12, et forme aussi un additionneur-soustracteur d'application générale, mais, cette fois-ci, utilisant des additionneurs-soustracteurs élémentaires en complément à 2. Eventuellement, les composants élémentaires 20 d'addition-soustraction en complément à 2 pourront être constitués par mise en série de trois éléments travaillant chacun sur quatre bits en complément à 2.

Le circuit de la Figure 5 comporte quatre composants élémentaires d'addition-soustraction 20-1, 20-2, 20-3 et 20-4 dont les entrées de fanion sont respectivement désignées par F1, F2, F3 et F4. Ces additionneurs sont associés à des circuits assurant les fonctions ET (indiqués $\Lambda$), OU (indiqués V) et OU EXCLUSIF (indiqués $\oplus$ ). L'examen du circuit montre que F1 = F2 = g1 et que la valeur prise par les fanions F3 et F4 est :

$$F3 = F4 = g1 \oplus (rq-1 \wedge r2q-1 \wedge g0)$$

Les sorties U1 et U0 prennent de leur côté la valeur :

$$U1 = g0 \wedge rq-1 \wedge r2q-1$$

$$U0 = rq-1 \oplus \overline{g0} \oplus r2q-1$$

On obtient alors, en sortie du circuit, la valeur de z donnée par le Tableau I pour chaque couple de valeurs de g0 et g1, sur 2q bits, soit q bits de poids faible (ou LSB) et q bits de poids fort (ou MSB).

On voit que l'emploi de la base définie par la formule (2) permet de n'utiliser qu'un seul schéma de

circuit pour constituer l'ensemble des quatre types d'additions et de soustractions modulo M nécessaires au calcul des transformées, définies par le Tableau I.

Les quatre additionneurs-soustracteurs 20 sont répartis en deux couches. La deuxième couche sera plus simple à réaliser en intégration monolithique que la première, un des signaux entrant sur chacun des composants élémentaires d'addition-soustraction 23 et 24 de la seconde couche étant un mot d'au plus 2 bits.

On peut utiliser, au lieu du schéma de la Figure 5, celui qui est montré en Figure 5a, mais uniquement pour effectuer des additions-soustractions réalisées dans le code de transformation, ce qui exclut les opérations définies par les deuxième et quatrième lignes du Tableau I.

Les circuits de la Figure 5a n'utilisent, pour tous les fanions, qu'une seule valeur g, qui peut prendre les deux valeurs de g1 du Tableau I et permet de remplir toutes les fonctions correspondant à g = 0 dans ce Tableau.

On verra que ce circuit simplifié est suffisant dans beaucoup de cas, en dépit de ces limitations.

Il faut relever au passage que l'utilisation en cascade d'un ET et d'un OU EXCLUSIF n'est nullement essentielle pour former le bit de poids le plus faible de z : tout autre schéma réalisant la fonction OU EXCLUSIF sur la sortie r0 de 20-4, le complément de la sortie r0 de 20-3 et le bit de poids le plus faible de la sortie de résultat de 20-4 serait utilisable.

Sur les Figures qui vont maintenant être décrites et montrent les circuits d'élaboration des transformées de longueur 3 et 4 à partir de blocs du genre montré en Figure 5 ou 5a, les entrées g0 et g1 ne seront pas représentées pour plus de simplicité, les valeurs données à g0 et g1 étant seules indiquées.

Circuit d'élaboration de TNE de longueur 3 ou 4 sur des mots codés et dans la nouvelle base

La Figure 6 montre un circuit fournissant la transformée de longueur 3 à partir des trois nombres déjà codés et amenés dans la nouvelle base, C(x0), C(x1) et C(x2). Ce circuit traite séparément les q bits de poids fort (MSB) et les q bits de poids faible (LSB). Il est particulièrement simple puisqu'il ne comporte pas d'inversion des signaux d'entrée C(x0), C(x1), C(x2). Ce résultat a été atteint par un choix approprié des opérations effectuées par les différents opérateurs. On voit que ces derniers peuvent tous être constitués par des circuits du type montré soit en Figure 4, soit en Figure 5, soit en Figure 5a.

On voit que la transformée de longueur 3 est ainsi obtenue en utilisant uniquement sept additionneurs modulo M répartis en deux couches, ce qui se traduit par quatre couches de composants élémentaires 20. Pour réaliser une transformée de Fourier rapide de même longueur, il aurait fallu utiliser deux couches de trois additionneurs travaillant chacun sur des nombres complexes et une couche de multiplicateurs, plus lents et beaucoup plus compliqués.

La Figure 7 montre, de façon similaire à la Figure 6, un circuit permettant de fournir la transformée en nombre entier de longueur 4, par une constitution qui permet encore d'éliminer les inversions de signaux d'entrée. Là encore, on voit que tous les composants élémentaires additionneurs-soustracteurs peuvent être constitués soit par les additionneurs-soustracteurs d'application générale des Figures 4 et 5, soit par la version simplifiée de la Fig. 5a. Pour plus de simplicité, on n'a pas différencié sur la Figure 7 les liaisons à 2q bits et les liaisons à q bits. Il faut simplement remarquer sur la Figure 7 que la sortie de l'additionneur-soustracteur 22-1 de 2q bits, est découpée en

quatre parties de chacune q/2 bits. Les deux sorties s0 et s1 de poids faible sont appliquées sur l'entrée d'addition de l'additionneur-soustracteur 22-5, dans une combinaison différente. Les sorties de poids fort s2 et s3 sont appliquées, de façon similaire, sur l'entrée d'addition de l'additionneur-soustracteur 22-5 et sur l'entrée de soustraction de l'additionneur-soustracteur 22-5, la quatrième série de q/2 bits étant une série de 1.

<u>Circuits d'assemblage des transformées de longueur 3 et 4 en transformées de longueur supérieure</u>

Le processus d'assemblage de transformées théoriques de nombres est en lui-même connu et il est largement utilisé dans des circuits d'assemblage de transformées de Fourier rapides. Cet assemblage implique essentiellement des multiplications par $2^k$ et par $\sqrt{2}$. Mais la mise en oeuvre du processus est notablement simplifiée dans le cas de l'invention, comme cela apparaitra à l'examen des circuits qui vont maintenant être décrits.

Certains couples de module M et de longueur N utilisant 2 comme racine de l'unité sont particulièrement intéressants : on peut notamment citer ceux mentionnés dans l'article "Longer NTT's with 2 as a root of unity" de H. Hollmann et al, dans ICASSP, 1983.

Le circuit 23 montré en Figure 8 permet de calculer $C(2^k.x)$ à partir de C(x). Physiquement, cette opération est effectuée par des décalages élémentaires, correspondant chacun à une multiplication par 2. Le circuit correspondant comporte un additionneur-soustracteur 24 qui, cette fois, ne peut pas avoir la constitution simplifiée montrée en Figure 5<u>a</u>. Les deux entrées de cet additionneur 24 reçoivent une combinaison des bits de poids faible et de poids fort de C(x), introduits dans un registre 26 muni d'une boucle de recirculation à inverseur 28. Le multiplet de 2q bits à multiplier par $2^k$ est chargé en parallèle dans les deux

parties terminales, ayant chacune q positions, du registre à décalage 26 dont la contenance est de 3q bits. Par application d'un signal d'horloge sur une entrée non représentée, k décalages successifs sont effectués sur le registre. L'additionneur-soustracteur 24 fournit le résultat par addition modulo M.

Les quatre demi-mots appliqués aux entrées de l'additionneur-soustracteur 24 peuvent être combinés de manière différente de celle de la Figure 8. La Figure 9 montre un circuit 23 constituant une variante de réalisation utilisant les mêmes composants 24, 26 et 28 que la Figure 8.

La Figure 10 montre une autre variante encore, qui autorise l'emploi de l'additionneur-soustracteur simplifié de la Figure 5, mais exige l'adjonction de deux inverseurs supplémentaires 30.

Les registres à décalage 26 des Figures 8, 9 et 10 peuvent être constitués physiquement par des multiplexeurs, commandés par la valeur de k (nombre de décalages) : ainsi un décalage de k positions se fait en un seul coup d'horloge, ce qui constitue un gain de temps.

Il ne sera nécessaire de disposer d'un circuit de multiplication par $\sqrt{2}$ que pour certaines valeurs de N qui amènent à utiliser $\sqrt{2}$ comme racine Nième de l'unité. Par exemple, pour P = 2q, avec N = 6q, on a :

$$\sqrt[N]{1} = \sqrt{2} = 2^{N/8} \quad (2^{N-4} - 1) \text{ modulo } M.$$

Dans ce cas, le changement de base permet de gagner une addition par rapport aux méthodes habituelles de multiplication par $\sqrt{2}$ : cette multiplication peut se faire à l'aide du circuit 32 de la Figure 11 et met en oeuvre deux additionneurs-soustracteurs 24 qui peuvent être de type simplifié :

Le mot de code C(x) est coupé en huit parties de même longueur x0,... x8 qui sont redistribuées aux entrées des soustracteurs 24 "dans le code". Pour

faciliter la lecture du schéma, les connexions ne sont pas indiquées, mais on voit que les mots appliqués aux entrées sont :

Premier soustracteur :

entrée + : x2 x1 x0 1 1 x7 x6 x5

entrée - : x6 x5 x4 x7 x6 x5 x4 x3

Deuxième soustracteur :

entrée + : sortie du premier additionneur

entrée - : x4 x3 x2 x1 x0 x3 x2 x1

Circuits extérieurs aux TNE et $TNE^{-1}$

Le dispositif de traitement comporte, en plus des circuits de calcul de transformée, les circuits 12 et 14 (changement de base, codage et décodage) et le circuit de multiplication générale 10.

On donnera maintenant, à titre d'exemples, des circuits appropriés lorsque le changement de base tel que défini par la formule (2) est effectué en prenant f0= -1. Les circuits de changement de base et de codage peuvent alors être très simples, car les deux opérations n'en font plus qu'une seule, constituée par le passage du "complément à 2" sur la base habituelle des puissances de 2, au nombre codé et représenté dans la nouvelle base.

Les Figures 12 et 13 montrent deux circuits permettant d'effectuer le changement de base et le codage dans le cas où l'on s'impose que tous les signaux traités sont positifs. Cette condition peut aisément être remplie en additionnant une constante au signal d'entrée.

Le circuit montré en Figure 12 comporte un additionneur-soustracteur 24 auquel est appliquée une commande g0 = 1, ce qui exclut l'utilisation du montage de la Figure 5a. L'une des entrées reçoit la grandeur X à coder sous la forme C(x). L'autre entrée reçoit, comme

chiffres de poids fort, q zéros, comme chiffres de poids faible, les q chiffres de poids fort de X. La sortie de l'additionneur-soustracteur 24 fournit l'inverse de C(x), ce qui permet de récupérer C(x) par simple interposition d'inverseurs 34. On voit que ce circuit exige uniquement un additionneur-soustracteur, 2q inverseurs et une manipulation sur les bits de X. Le résultat est obtenu par addition de mots, "hors du code", et complémentation du résultat.

La variante de réalisation montrée en Figure 13 utilise un additionneur-soustracteur 24 qui peut, cette fois, être du type simplifié montré en Figure 5a. Elle comporte, comme éléments d'entrée, un jeu d'inverseurs 36 qui fournissent en sortie le complément de X. Ce complément est appliqué sur l'une des entrées de l'additionneur-soustracteur 24. L'autre entrée reçoit, en tant que chiffres de poids fort, q "un", en tant que chiffres de poids faibles, les q bits de poids fort du complément. Le résultat C(x) est alors obtenu directement en sortie de l'additionneur 24.

Le codage et le changement de base se ramèneraient simplement à une complémentation dans le cas où X est codé sur moins de q bits. Mais, du fait de l'adjonction d'une constante au signal d'entrée pour rendre X positif ou nul, cette condition ne sera généralement pas remplie.

Dans le cas où l'on s'impose que X est donné en complément à 2 sur q bits, ou moins, le codage et le changement de base constituent une seule opération qui est très simple : il suffit d'étendre X sur 2q bits, par propagation du bit de signe dans un registre, puis de complémenter le registre ainsi obtenu.

Les circuits permettant de passer du nombre codé dans la nouvelle base à un nombre codé en complément à 2 dans la base de départ (base des puissances de 2) peuvent également être réalisés de façon simple. Cette

opération est effectuée par le circuit 14 sur le résultat C(y) de la transformée en nombre entier inverse $TNE^{-1}$ sur la Figure 2.

Dans le cas où Y est un nombre binaire positif ou nul, le circuit peut être celui montré en Figure 14. Il comporte un jeu d'inverseurs 38 destinés à complémenter le signal d'entrée C(y) et un soustracteur classique 40. L'entrée + du soustracteur reçoit le complément de C(y). L'entrée - reçoit q zéros en tant que bits de poids fort, les quatre bits de poids fort du complément de C(y) en tant que bits de poids faible.

Dans la mesure où l'on veut disposer de Y sous forme de son complément à 2, le circuit peut être celui de la Figure 15. Il comporte un additionneur-soustracteur 42 présentant une entrée de fanion F qui permet deux modes de fonctionnement différents suivant que cette entrée est à zéro ou à 1. L'entrée + de l'additionneur-soustracteur 42 reçoit le complément à 2 du signal C(y) élaboré par des inverseurs 44. L'autre entrée reçoit q zéros en tant que bits de poids fort, la sortie d'un multiplexeur deux vers un 46 en tant que bits de poids faible. L'une des entrées du multiplexeur reçoit les bits de poids fort de C(y), l'autre le complément de ce nombre de q bits, élaboré par des inverseurs 48. Le bit de poids le plus fort de C(y), qui représente le signe, est appliqué à l'entrée F et à l'entrée de commande du multiplexeur 46.

Lorsque ce bit de signe est à zéro, ce sont les bits de poids fort de C(y) qui sont appliqués à la seconde entrée de l'additionneur-soustracteur 42 et l'opération effectuée consiste en l'addition de C(y) et des q bits de poids fort de C(y), affectés des poids faibles. L'additionneur-soustracteur est alors en mode addition.

Si au contraire le bit de poids fort de C(y) est égal à 1, la sortie du multiplexeur est constituée par

le complément des bits de poids fort de C(y) et l'additionneur-soustracteur 42 fonctionne en mode soustraction. La sortie Y est alors constituée par la différence entre C(y) et les q bits de poids fort de C(y), affectés au poids faible.

D'autres variantes encore de réalisation des circuits de changement de base et de décodage sont possibles, utilisant l'addition-soustraction modulo M dans le code.

Les Figures 16 et 17 montrent deux autres circuits constituant des variantes de celui de la Figure 15, permettant également d'obtenir Y en complément à 2 à partir de C(y) et pouvant utiliser des additionneurs-soustracteurs élémentaires du genre de celui montré en Figure 3 et qui, selon l'état du fanion F, fournit sur sa sortie :

pour F = 0, x+y+ri

pour F = 1, $x+\overline{y}+ri$.

Les opérations sont effectuées sur des nombres de 2q bits.

Dans le cas de la Figure 16, C(y) est appliqué sur l'entrée qui est soustractive pour F = 1 et le fanion est mis à 1. Le bit de signe de C(y) (bit de poids le plus fort) est appliqué comme entrée de retenue ri. Ce même bit de signe est appliqué en tant que valeur des q bits de poids fort à l'entrée additive de l'additionneur-soustracteur élémentaire.

Dans le cas de la Figure 17, c'est le bit de signe de C(y) qui est appliqué à l'entrée de fanion F.

L'opération effectuée par l'additionneur-soustracteur 20 est une addition lorsque le fanion F est à zéro, une soustraction lorsque ce fanion est à un. Si le bit de signe de C(y) est égal à 0, on obtient en sortie Y = C(y) avec les q bits de poids fort de C(y) ramenés aux poids les plus faibles de Y. La sortie du multiplexeur 50 est en effet alors l'entrée constituée par

les q bits de poids fort de C(y).

Si au contraire le bit de signe de C(y) est égal à 1, Y est constitué par C(y) dont sont retranchés les q bits de poids fort de C(y), ramenés aux poids faibles. La sortie du multiplexeur est alors en effet dans ce cas celle qui reçoit les q bits de poids fort par l'intermédiaire d'inverseurs 52.

Enfin, le circuit 10 de la Figure 2, qui doit réaliser une multiplication générale, doit être prévu pour effectuer, terme à terme, N multiplications entre :

- les multiplicandes constitués par les N mots transformés des N mots entrants Xn,
- les N multiplicateurs constitués par les N mots transformés à partir des N mots entrants Hn.

Ces multiplications peuvent être réalisées en utilisant la technique, bien connue, d'additions et de décalages successifs. Mais il est plus avantageux d'utiliser les opérateurs simples déjà définis permettant la multiplication par toute puissance de 2 modulo M (Figures 8, 9 et 10) et ceux permettant la multiplication par $\sqrt{2}$ modulo M (Figure 11). Ce résultat peut être atteint par un processus de traitement qu'on peut qualifier de "méthode des additions-décalages généralisés" et qui sera maintenant décrit.

Lorsque l'on doit multiplier deux nombres X et H l'un par l'autre et que H est fixe, on décompose H en plusieurs termes :

$$H = \sum_{i=1}^{K} (\sqrt{2})^{i} \text{ Modulo } M$$

Les termes de H peuvent être ordonnés sous la forme :

$$H = \sum_{i=1}^{j} 2^{k_i} \sqrt{2} + \sum_{i=j+1}^{K} 2^{k_i}$$

Le circuit peut alors être celui schématisé en Figure 18, où la partie haute correspond au premier terme de l'équation ci-dessus.

Il faut relever que K peut dans ce cas être beaucoup plus faible que dans une représentation sous forme d'un nombre binaire affecté d'un signe pour un calcul habituel.

L'invention est susceptible de très nombreuses variantes de réalisation, portant aussi bien sur la constitution des composants que sur leur association.

Dans tous les cas, les circuits élémentaires utilisés présentent une grande généralité : les additionneurs-soustracteurs modulo M précédemment décrits sont utilisables quelle que soit la valeur de $f_o$ choisie. On dispose ainsi d'un bloc qui sera seul utilisé en dehors d'éléments courants. Seuls les circuits de codage-changement de base et de décodage-retour à la base de départ dépendent de la valeur choisie pour $f_o$. Aussi bien les additionneurs-soustracteurs que les éléments de décalage ne dépendent pas de la longueur de transformée totale. Ils dépendent uniquement du module M choisi. Seul sera modifié, en fonction de la longueur de transformée totale, le circuit permettant de recombiner les transformées de faible longueur, circuit constitué à partir de circuits de multiplication par 2 et par $\sqrt{2}$ dans le cas, qui sera le plus fréquent, où l'on prend 2 ou $\sqrt{2}$ comme racine Nième de l'unité modulo M.

REVENDICATIONS

1. Dispositif de traitement en temps réel de signal numérique par convolution, comprenant un circuit multiplieur associé à des circuits à transformation en nombres entiers, à module M de la forme :

$$2^P - 2^q + 1$$

sur chaque entrée et à un circuit à transformation inverse sur la sortie,

caractérisé en ce que chacun des circuits à transformation en nombres entiers (16) est précédé d'un circuit de changement de base arithmétique et de codage (12) et en ce que le circuit de transformation inverse est suivi d'un circuit de décodage et de retour à la base de départ (14), lesdits circuits étant prévus de façon qu'un nombre X modulo M dans la base d'origine en puissances de 2 corresponde, dans la nouvelle base, à un nombre

$$X = \sum_{i=0}^{p-q-1} f_i x_i + \sum_{j=0}^{q-1} e_j . x_{j-q+P} \text{ (modulo M)}$$

f0 étant un entier compris entre 1 et M-1 et les coefficients fi et ej remplissant les conditions

$$\begin{cases} 2f_{P-q-1} = e_o + f_o \text{ (mod M) et } 2e_{q-1} = -f_o \text{ (mod M)} \\ 2f_i = f_{i+1},\ 2e_i = e_{i+1} \text{ pour les autres indices.} \end{cases}$$

2. Dispositif selon la revendication 1, caractérisé en ce que chacun des circuits à transformation en nombres entiers (16) est constitué de plusieurs circuits fournissant chacun une transformée de longueur 3 ou 4 et d'un circuit de recombinaison des transformées de longueur 3 ou 4 pour atteindre la longueur totale de la transformée.

3. Dispositif selon la revendication 1 ou 2, caractérisé en ce que les circuits de transformation en nombres entiers utilisent un module M de la forme $2^{2q} - 2^{q} + 1$ ; et 2 ou $\sqrt{2}$ comme racine primitive Nième de l'unité modulo M.

4. Dispositif selon la revendication 1, 2 ou 3, caractérisé en ce que les circuits de changement de base et de codage sont constitués par un circuit unique, f0 étant pris égal à -1 dans le changement de code.

5. Dispositif selon l'une quelconque des revendications précédentes, caractérisé en ce que les circuits de transformation en nombres entiers (TNE et $TNE^{-1}$) ainsi que les circuits de décodage et de changement de base sont constitués par association d'additionneurs-soustracteurs élémentaires identiques modulo M permettant de réaliser au moins les fonctions addition-soustraction simple et addition puis addition de $f_o$ (dite addition "dans le code") ou soustraction puis soustraction de $f_o$ (dite soustraction "dans le code").

6. Dispositif selon la revendication 3, caractérisé en ce que le circuit de multiplication par $\sqrt{2}$ est constitué de façon à réaliser deux additions modulo M, dans le code.

7. Dispositif selon la revendication 3, caractérisé en ce que le circuit de multiplication par $2^k$ est constitué d'un registre à décalage suivi d'un seul additionneur dans le code modulo M ou d'une seule addition simple modulo M, quelle que soit la valeur de <u>k</u> (Figure 8 ou 9).

8. Dispositif selon la revendication 1, 2 ou 3, caractérisé en ce que chaque circuit de transformation en nombres entiers de longueur N = 3 comprend sept additionneurs modulo M répartis en deux couches, les quatre additionneurs (22-1 à 22-4) de la première couche recevant des combinaisons différentes des bits de poids

faible et de poids fort des trois nombres codés et amenés dans la nouvelle base ($C(x_o)$, $C(x_1)$, $C(x_2)$) tandis que les trois additionneurs de la seconde couche (22-5 à 22-7) reçoivent des combinaisons différentes des sorties de la première couche (Figure 6).

9. Dispositif selon l'une quelconque des revendications précédentes, caractérisé en ce que le circuit multiplieur (10), destiné à effectuer, terme à terme, N multiplications entre N mots C(-X) transformés de N mots entrants Xn et N multiplicateurs constitués de N mots transformés de -N mots entrants Hn, comporte des moyens (23) de multiplication des termes de la décomposition de Hn sur la base des puissances successives de $\sqrt{2}$ par C(X), des moyens additionneurs (22) recevant les sorties des moyens de multiplication, et un circuit (32) de multiplication par $\sqrt{2}$ des sorties des moyens additionneurs (Figure 18).

10. Dispositif selon l'une quelconque des revendications précédentes, caractérisé en ce que le circuit de décodage et de retour à la base de départ (14) comprend uniquement un additionneur-soustracteur (20) monté pour recevoir : sur une entrée soustractive la transformée C(y) à 2q bits ; sur une entrée de retenue le bit de poids fort constituant le bit de signe de la transformée C(y) ; sur les bits de poids fort de son entrée additive, ledit bit de signe ; sur les bits de poids faible de son entrée additive, les bits de poids forts de la transformée C(y) ; et fournissant sur sa sortie le nombre décodé et ramené dans la base de départ en complément à deux (Figure 18).

11. Dispositif selon la revendication 5, caractérisé en ce que chaque additionneur-soustracteur "hors du code" ou "dans le code" comprend uniquement des moyens pour effectuer une addition et des reports de retenue (Figure 4).

12. Dispositif selon la revendication 11, prévu

pour traiter des nombres de 2q bits et fournir un nombre de 2q bits, caractérisé en ce qu'il comprend quatre additionneurs-soustracteurs simples (20-11 à 20-14) opérant sur 2 bits et montés de façon à recevoir des combinaisons différentes de bits de poids fort et de poids faible et des circuits NON-OU EXCLUSIFS de sortie.

FIG.1

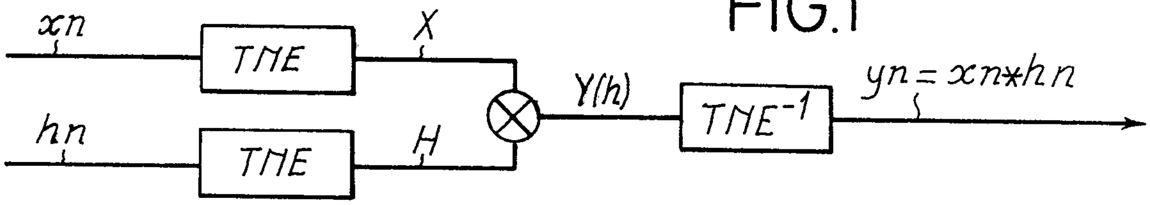


FIG.2

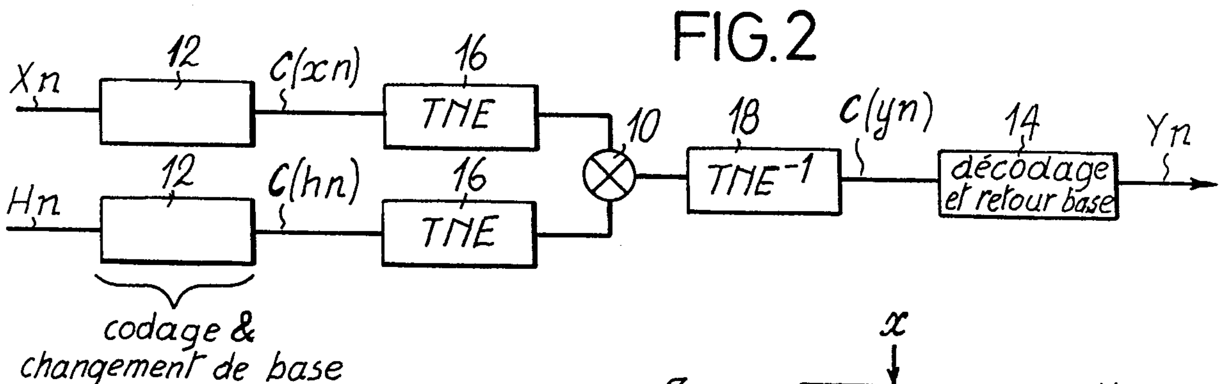


FIG.3

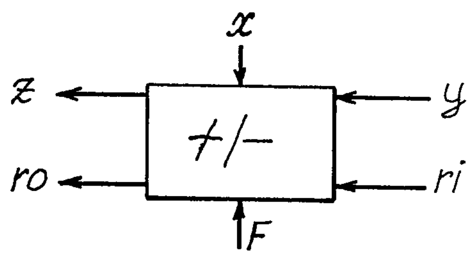


FIG. 8

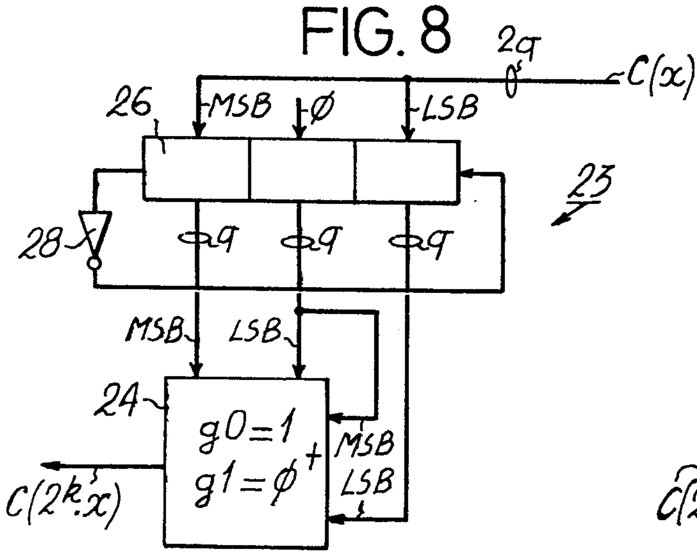


FIG.9

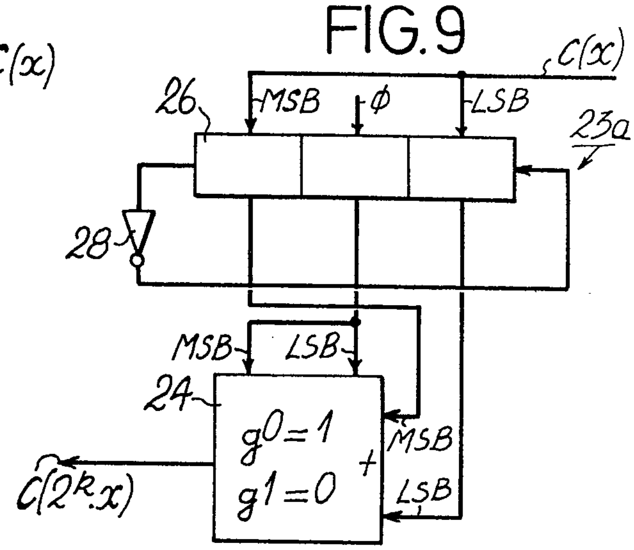


FIG.10

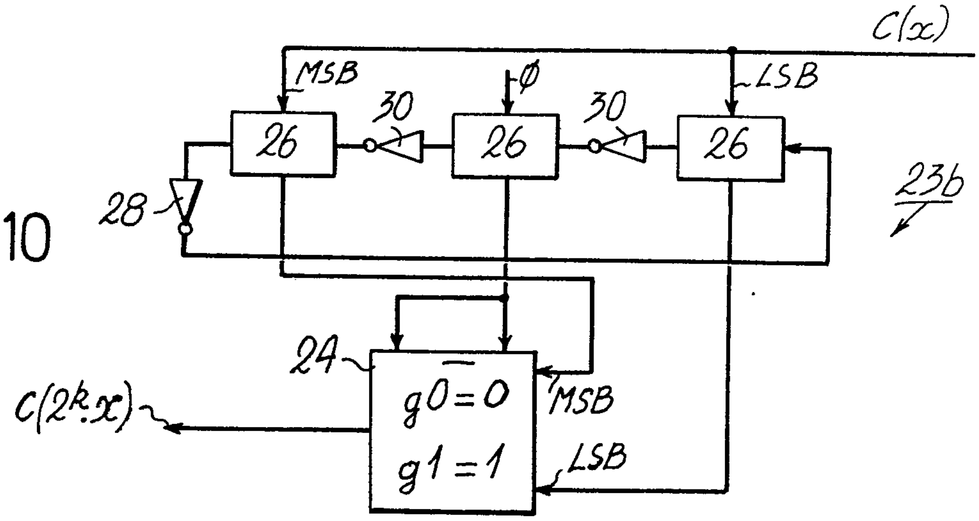

2/6

0175623

FIG.5

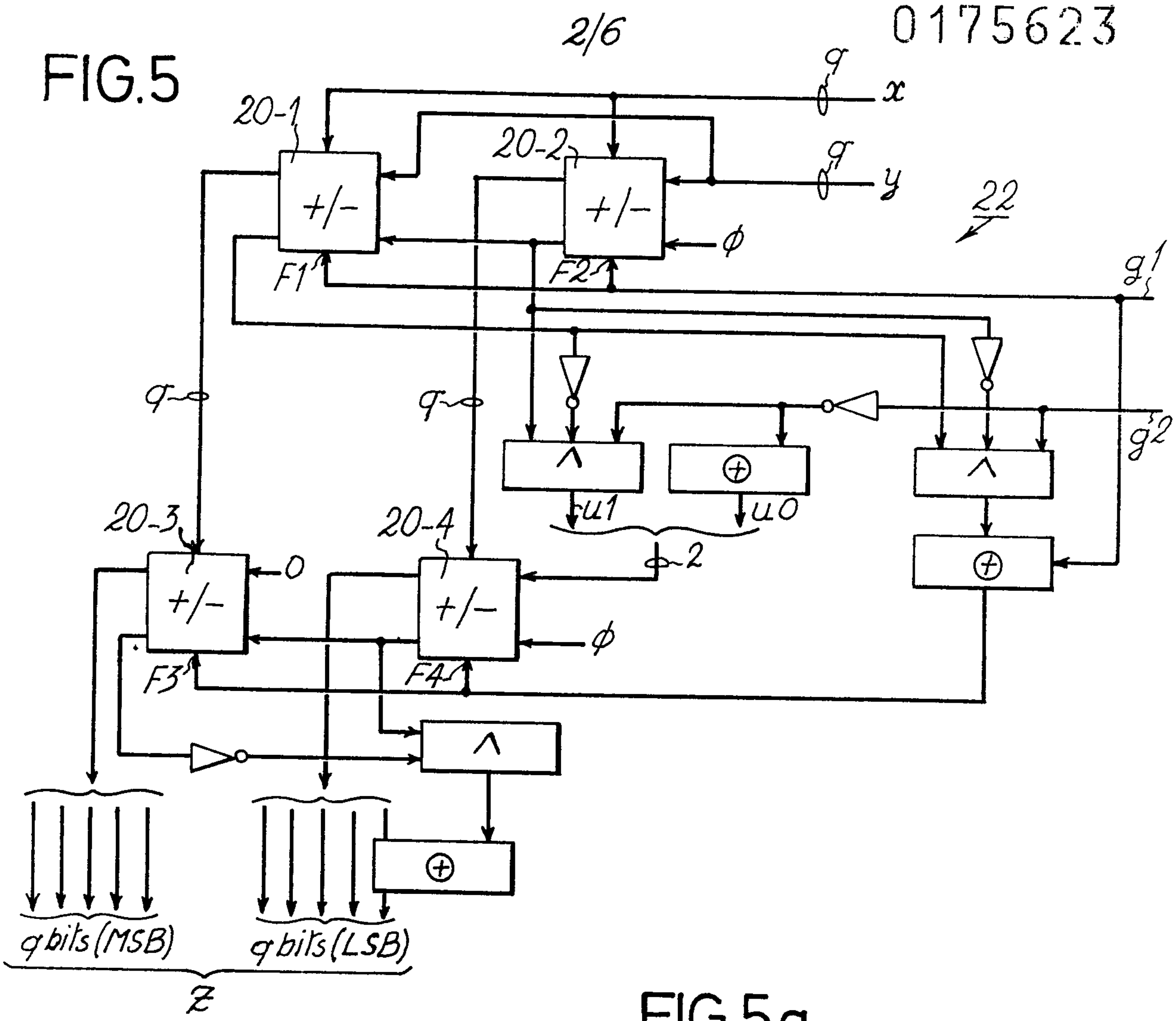


FIG.5a

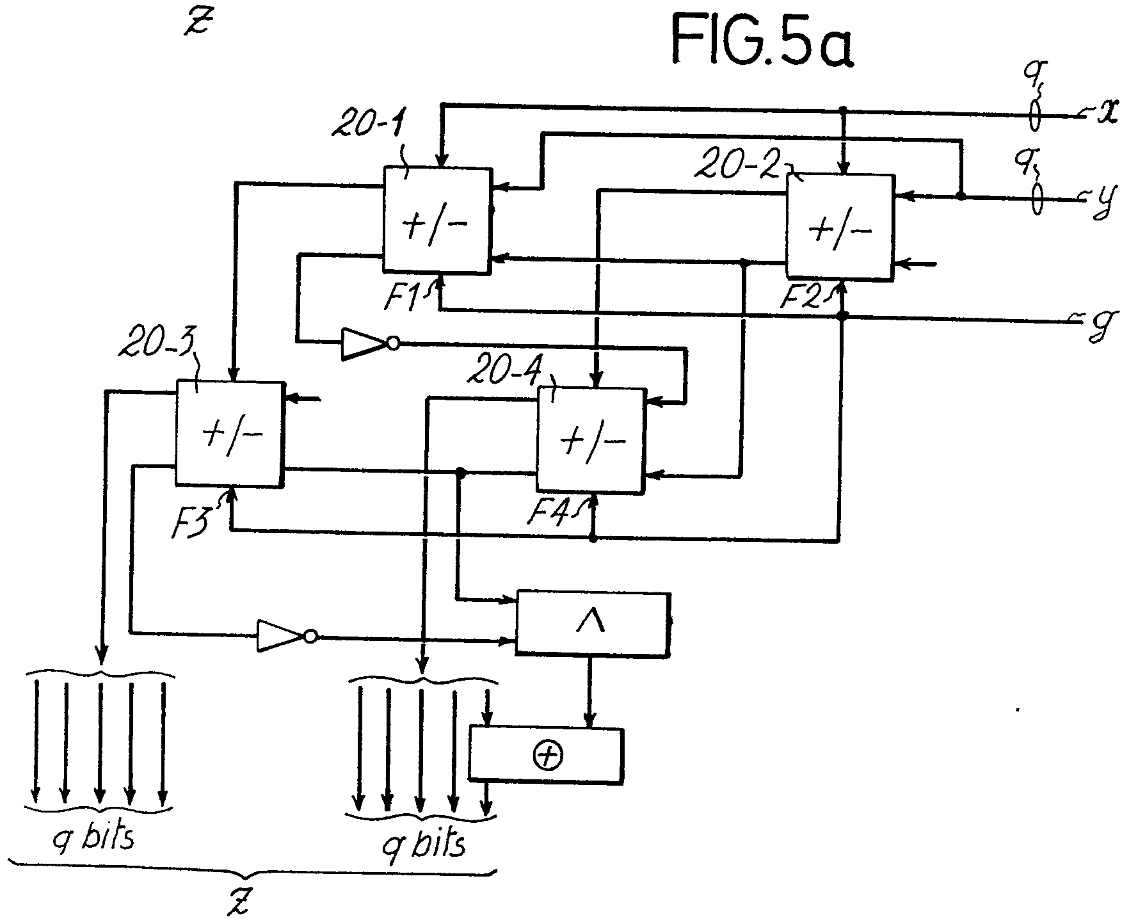

FIG.6

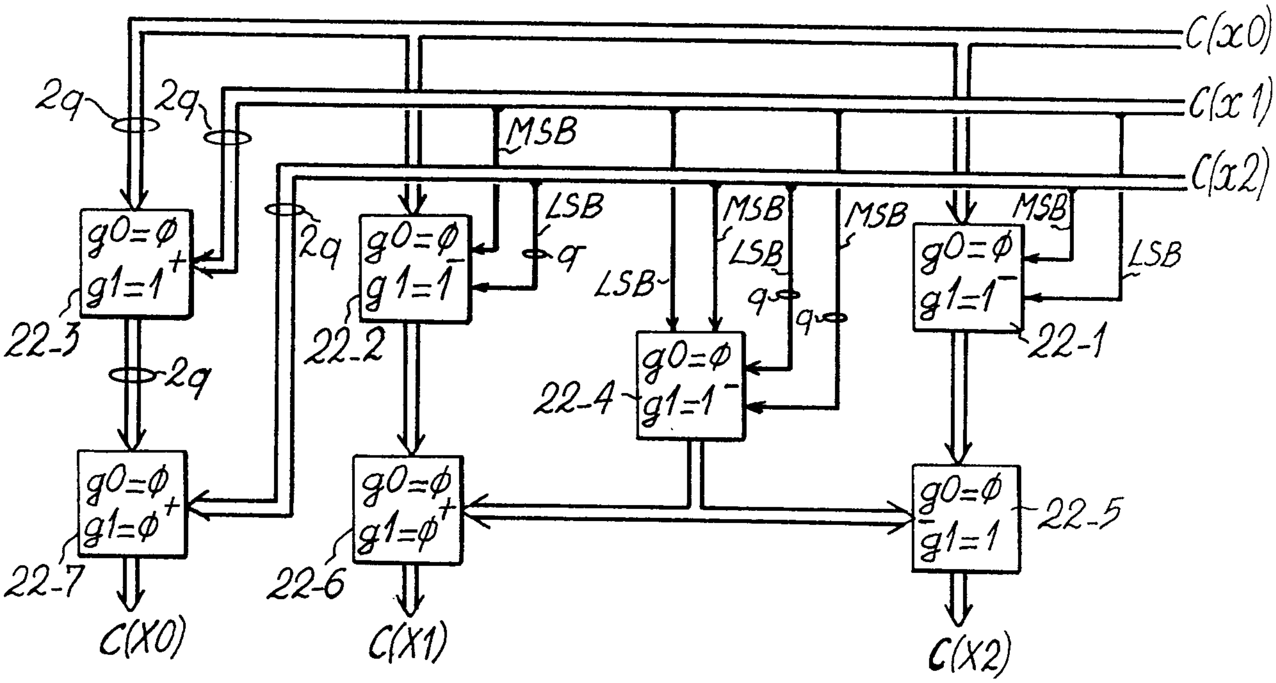
C(x0)
C(x1)
C(x2)
2q
2q
2q
MSB
LSB
q
MSB
LSB
LSB
MSB
MSB
LSB
q
q
g0=ϕ
g1=1+
g0=ϕ
g1=1−
g0=ϕ
g1=1−
g0=ϕ
g1=1−
22-3
22-2
22-1
22-4
2q
g0=ϕ
g1=ϕ+
g0=ϕ
g1=ϕ+
g0=ϕ
g1=1
22-7
22-6
22-5
C(X0)
C(X1)
C(X2)

FIG.7

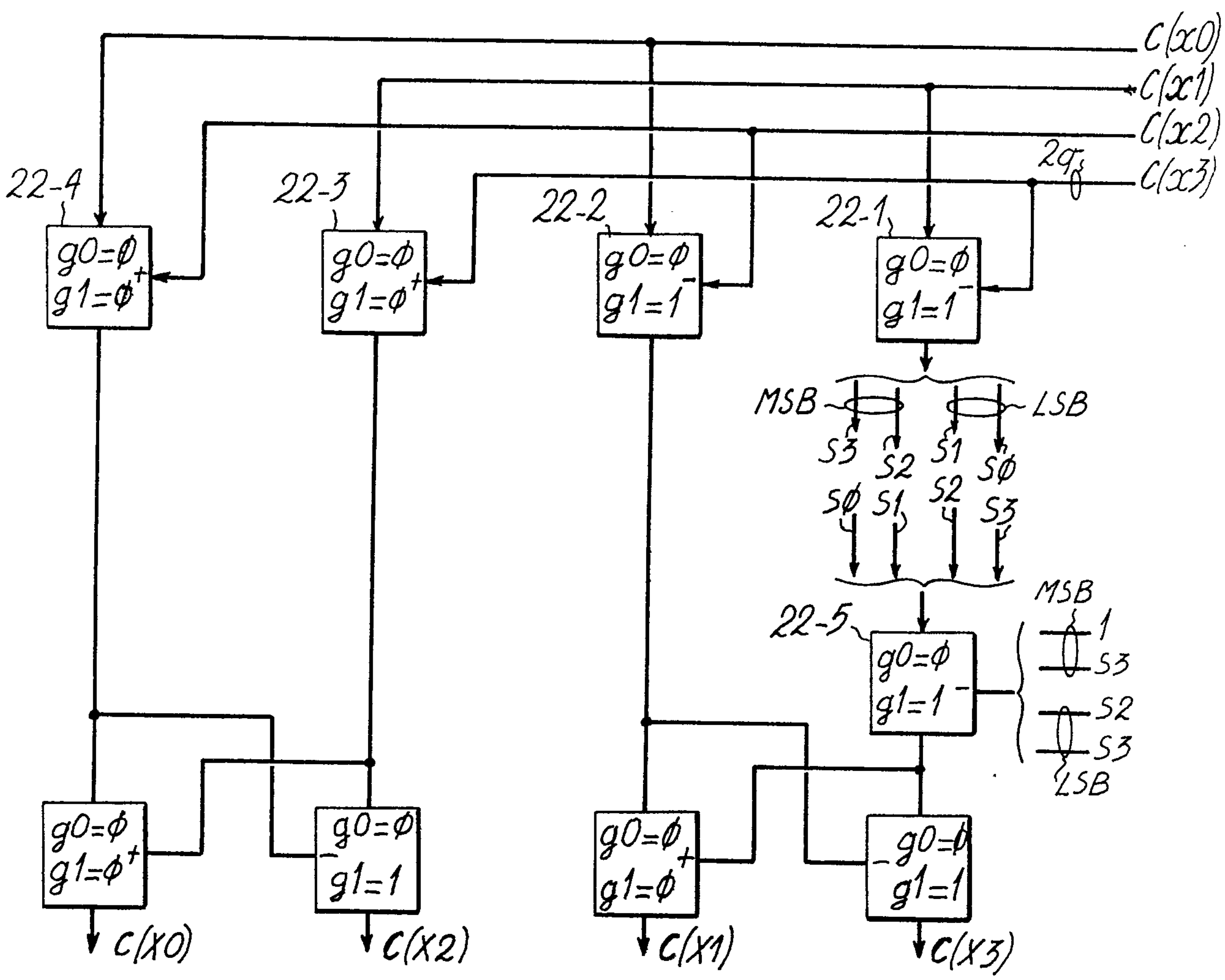
C(x0)
C(x1)
C(x2)
C(x3)
2q
22-4
22-3
22-2
22-1
g0=ϕ
g1=ϕ+
g0=ϕ
g1=ϕ+
g0=ϕ
g1=1−
g0=ϕ
g1=1−
MSB
LSB
S3
S2
S1
Sϕ
Sϕ
S1
S2
S3
MSB
22-5
g0=ϕ
g1=1−
1
S3
S2
S3
LSB
g0=ϕ
g1=ϕ+
g0=ϕ
g1=1
g0=ϕ
g1=ϕ+
g0=ϕ
g1=1
C(X0)
C(X2)
C(X1)
C(X3)

FIG.11

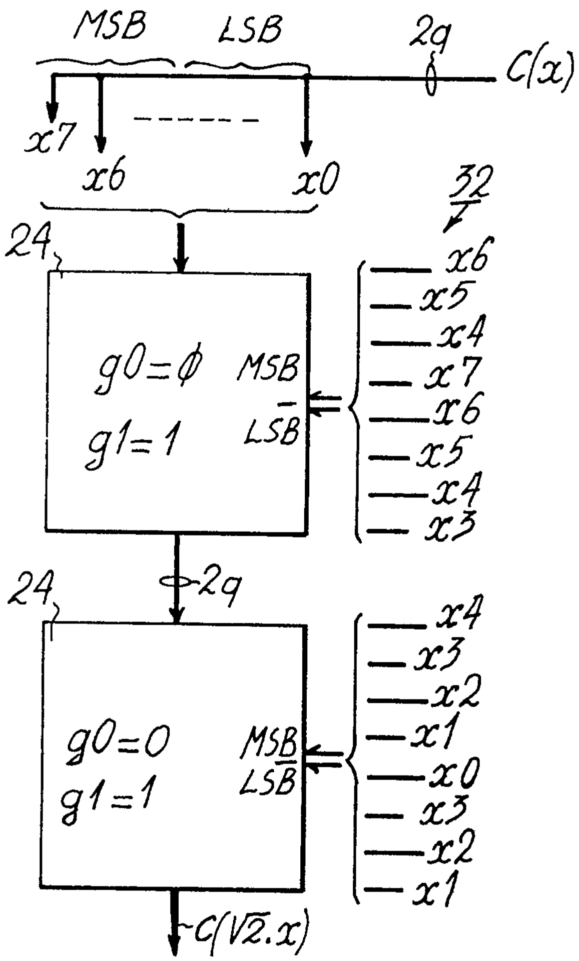


FIG.12

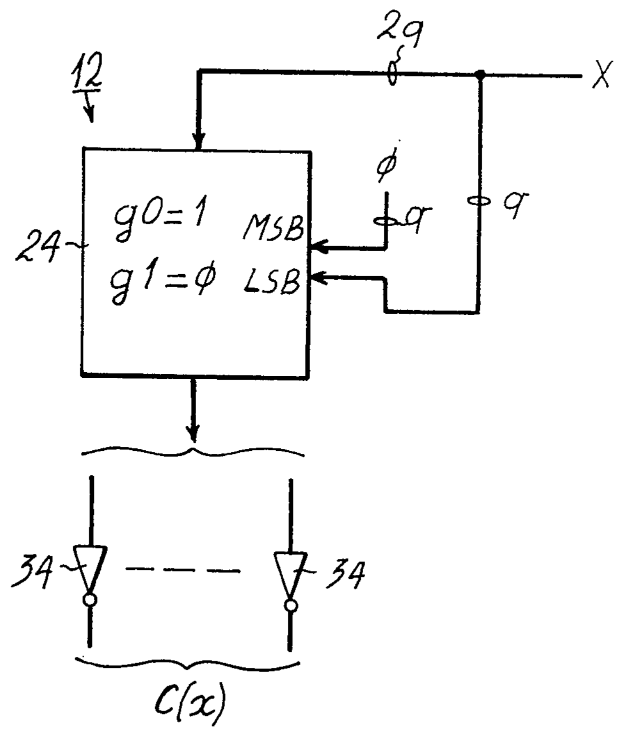


FIG.13

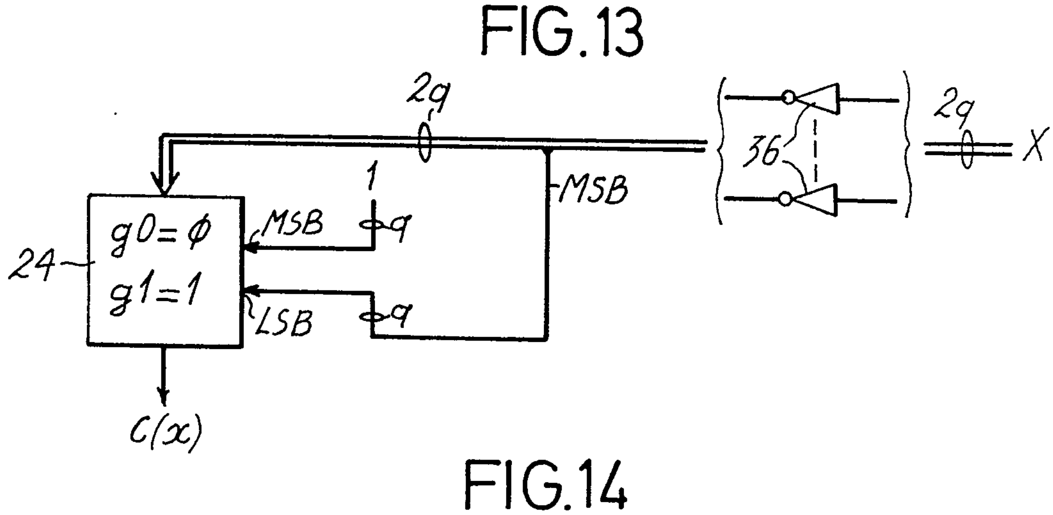


FIG.14

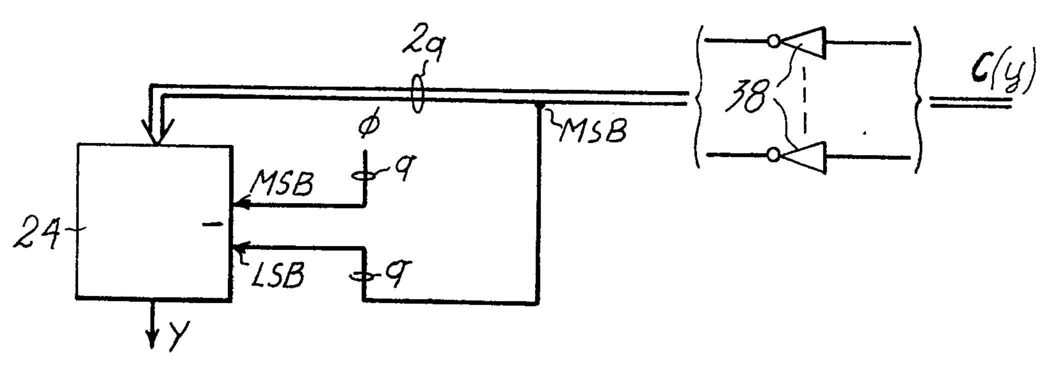

FIG.15

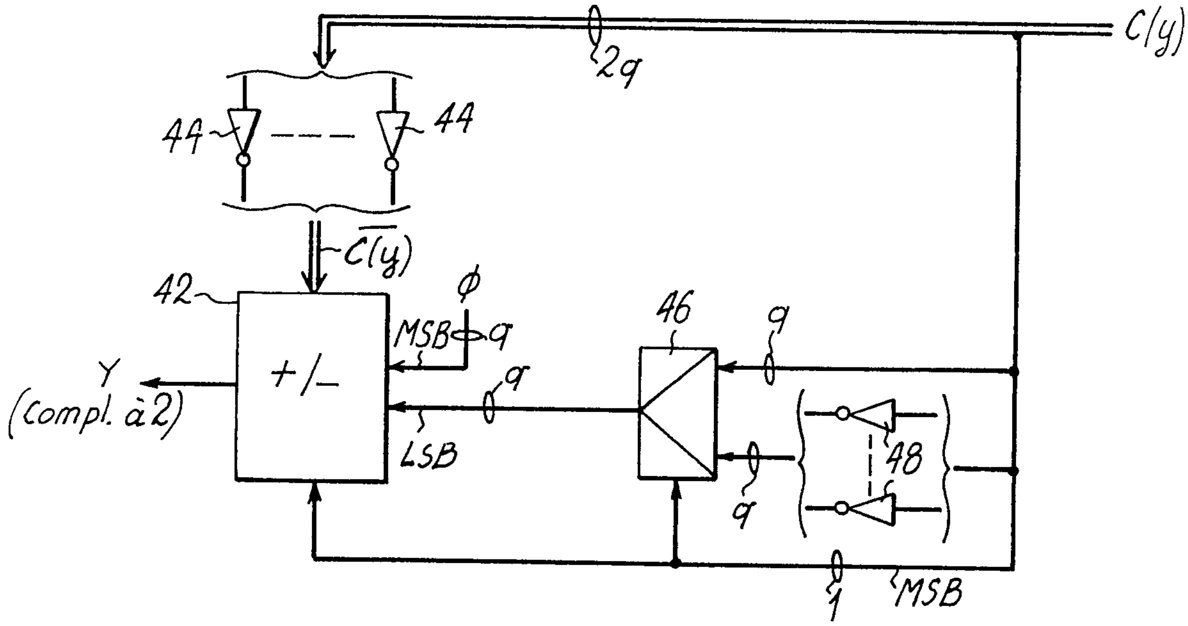


FIG.16

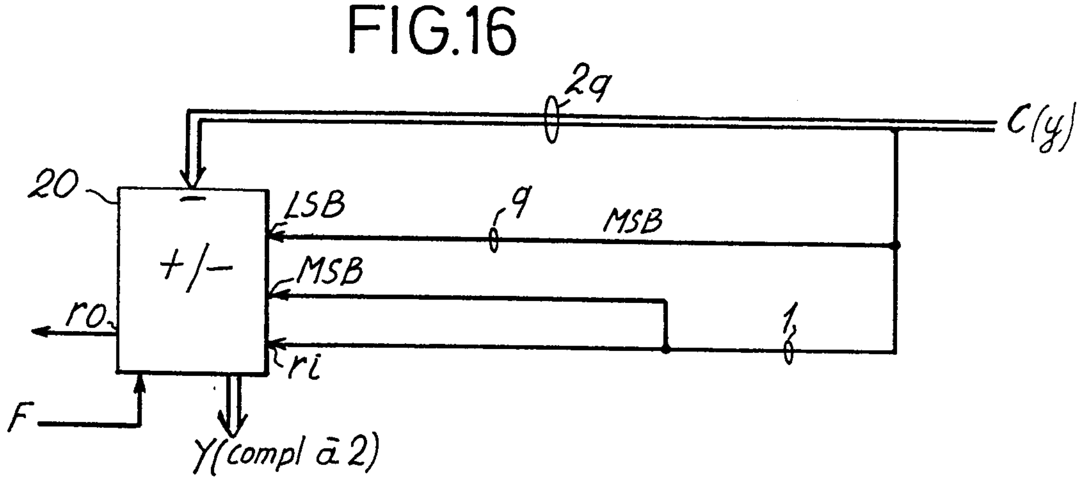


FIG.17

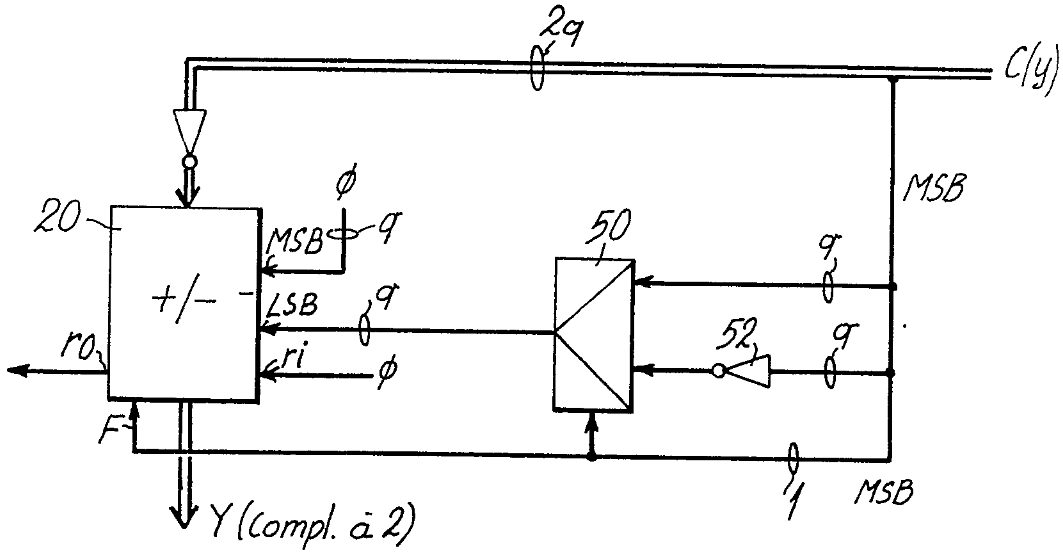

FIG.18

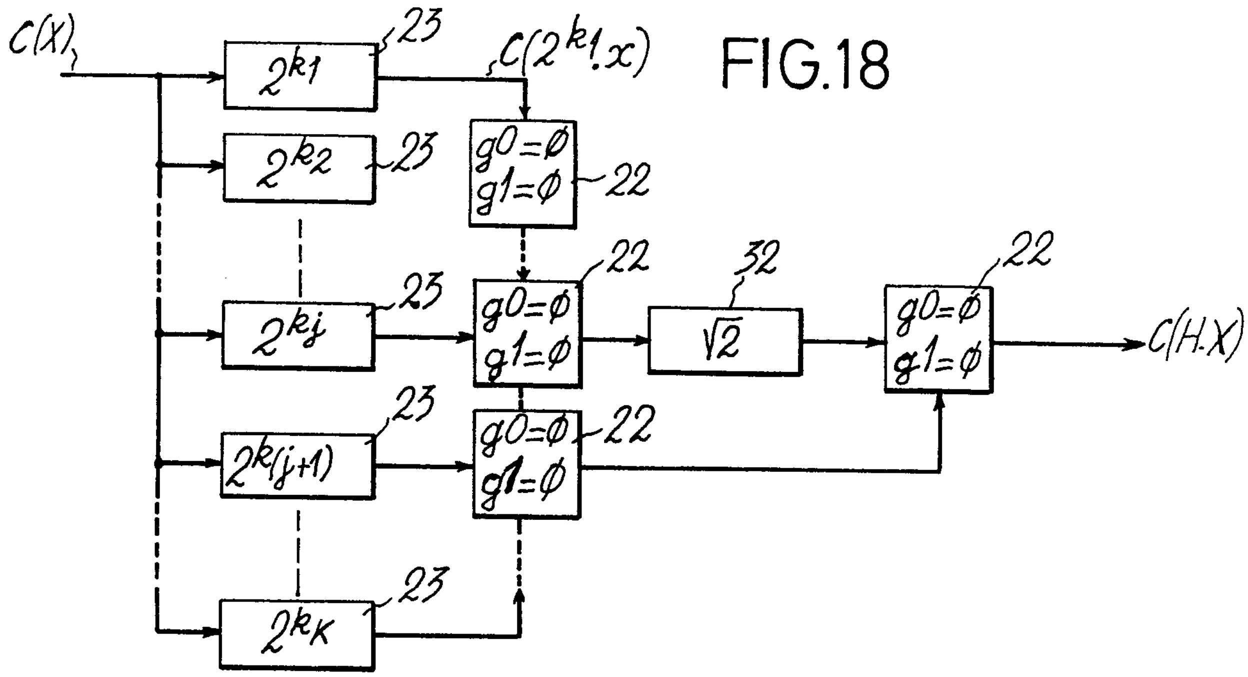
C(X)
$2^{k1}$
$2^{k2}$
$2^{kj}$
$2^{k(j+1)}$
$2^{kK}$
23
C($2^{k1}$.x)
g0=Ø
g1=Ø
22
32
√2
C(H.X)

FIG. 4

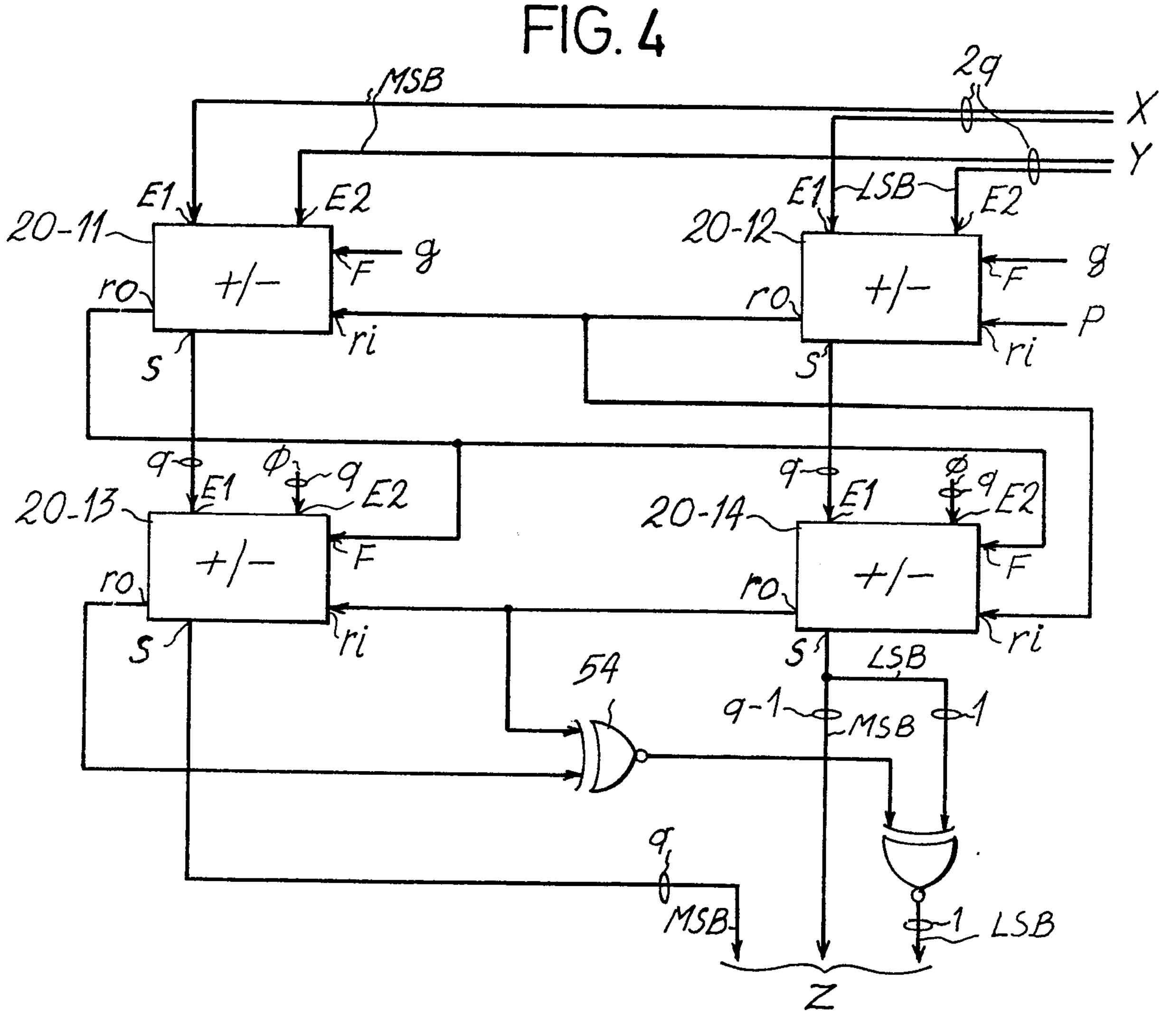
MSB
2q
X
Y
E1
E2
LSB
20-11
20-12
+/-
g
F
P
ro
ri
S
q
Ø
20-13
20-14
54
q-1
MSB
1
LSB
Z

0175623

Numéro de la demande

Office européen des brevets

# RAPPORT DE RECHERCHE EUROPEENNE

EP 85 40 1858

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.4) |
| A | IEEE TRANSACTIONS ON ACOUSTICS, SPEECH AND SIGNAL PROCESSING, vol. ASSP-22, no. 2, avril 1974, pages 87-97, IEEE, R.C. AGARWAL et al.: "Fast convolution using fermat number transforms with applications to digital filtering"<br>--- | 1 | G 06 F 15/336 |
| A | SYSTEMS-COMPUTERS-CONTROLS, vol. 14, no. 1, janvier-février 1983, pages 29-38, Scripta Publishing Co., Silver Spring, Maryland, US; Y. MORIKAWA et al.: "Hardware realization of high-speed butterly for the maximal length fermat number transform"<br>----- | 1 | |
| | | | DOMAINES TECHNIQUES RECHERCHES (Int. Cl.4) |
| | | | G 06 F 15/336<br>G 06 F 15/332 |

Le présent rapport de recherche a été établi pour toutes les revendications

| Lieu de la recherche | Date d'achèvement de la recherche | Examinateur |
|---|---|---|
| LA HAYE | 12-12-1985 | BURGAUD C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82